# FASCICULE DE BREVET EUROPEEN

(11) **EP 2 398 744 B1**
(45) Date de publication et mention de la délivrance du brevet: **16.05.2018**
(21) Numéro de dépôt: 10709878.2
(22) Date de dépôt: 17.02.2010
(51) Int. Cl.: C03B 3/02, C03B 5/235, C03B 1/00

(54) **PROCEDE DE FUSION D'AU MOINS UNE MATIERE MINERALE EN POUDRE**
VERFAHREN ZUM SCHMELZEN VON MINDESTENS EINEM PULVERISIERTEN MINERALMATERIAL
METHOD FOR MELTING AT LEAST ONE POWDERED MINERAL MATERIAL

(30) Priorité: 18.02.2009 FR 0951058
(43) Date de publication de la demande: 28.12.2011
(73) Titulaire: Cerlase, 87068 Limoges (FR)
(72) Inventeur: HORY, Arnaud, F-87430 Verneuil sur Vienne (FR)
(74) Mandataire: Aquinov
(86) Numéro de dépôt international: PCT/FR2010/050263
(87) Numéro de publication internationale: WO 2010/094885

(56) Documents cités:
- EP-A- 0 406 796
- WO-A-2008/095204
- FR-A1- 2 764 877
- JP-A- 60 221 332
- JP-A- 2002 293 574
- SU-A1- 1 636 352
- US-A- 4 300 474

## Description

La présente invention se rapporte à un procédé de fusion d'au moins une matière minérale en poudre ainsi qu'à un dispositif pour sa mise en oeuvre. Selon une application non limitative, l'invention se rapporte à un procédé de fabrication d'une fritte de verre.

Le procédé de fabrication du verre et le procédé de fabrication d'une fritte de verre comprennent des étapes communes consistant à mélanger des matières premières vitrifiables et à fusionner ce mélange dans un four à haute température de l'ordre de 1400° à 1500°C.

Suite à cette fusion, dans le cas d'une fritte de verre, le mélange fondu est refroidi très rapidement par une trempe, généralement dans de l'eau froide. Après séchage, le mélange solide est broyé puis tamisé afin d'obtenir une poudre qui est une fritte de verre.

Dans le cas d'un verre, ce dernier est mis en forme à chaud puis recuit avant d'être refroidi.

Préalablement à la mise en forme dans le cas d'un verre ou à la trempe dans le cas d'une fritte de verre, le mélange vitrifiable est soumis successivement à :
- une phase de fusion de 800° à 1400°C durant laquelle la matière solide se transforme en verre fondu provoquant des dégagements gazeux et la formation de bulles gazeuses,
- une phase d'affinage de 1450° à 1530°C visant à éliminer les bulles gazeuses grâce à une élévation de température pour fluidifier le verre et à l'ajout d'un agent d'affinage comme par exemple du sulfate de sodium pour augmenter la taille des bulles gazeuses,
- une phase de conditionnement thermique lors de laquelle on diminue la température du verre fondu à une température de l'ordre de 1000°C pour adapter la viscosité du mélange fondu au façonnage, les dernières bulles gazeuses remontant à la surface.

Le mélange de matières premières vitrifiables comprend de la silice ainsi que différents oxydes.

Pour abaisser le point de fusion du mélange et réduire ainsi les besoins énergétiques, le mélange de matières premières vitrifiables comprend des fondants (oxydes alcalins) qui permettent d'abaisser la température de fusion à environ 1400°C. Comme fondant, on peut citer l'oxyde de sodium (soude), l'oxyde de potassium ou l'oxyde de magnésium. Un même verre peut associer plusieurs fondants, par exemple de la soude et de la chaux pour obtenir un verre dit sodo-calcique ou de la soude et du plomb pour obtenir du cristal.

Pour réduire les besoins énergétiques, le document WO2008/095204 décrit une étape préalable à la fusion consistant à broyer la matière première vitrifiable afin de réduire la granulométrie du mélange avant fusion et à homogénéiser le mélange afin de réduire le temps nécessaire à l'homogénéisation de la masse fondue.

Selon un mode d'obtention de type discontinu, pour la fusion des frittes de verre, on utilise un four à pot pour la fusion du mélange de matières premières sous forme de poudre. Dans ce cas, le mélange est placé dans un creuset qui est disposé dans un four fonctionnant avec un combustible fossile, gaz ou fuel. Après les différentes phases de fusion, le mélange liquide est refroidi rapidement pour obtenir une trempe en le déversant dans de l'eau.

Cette solution n'est pas satisfaisante car elle nécessite une grande quantité d'énergie et de changer régulièrement les pots en matériaux réfractaires, le mélange liquide étant très corrosif.

Dans le cas du verre, on peut recourir à des fours à bassin constitués de matériaux réfractaires et formant une cuve pouvant contenir jusqu'à 2500 tonnes de verre sur 1,50 m d'épaisseur. Ces bassins utilisent des brûleurs fonctionnant avec un combustible fossile pour provoquer l'élévation de température et son maintien. En variante, certains fours peuvent être de type électrique et l'énergie diffusée directement dans le verre en fusion qui est conducteur de la chaleur à partir de 250°C.

Le mélange de matières premières vitrifiables est incorporé à une première extrémité du four dans un mélange déjà fondu et ce mélange en se déplaçant vers l'évacuation s'homogénéise et s'affine progressivement.

Comme précédemment, cette solution n'est pas pleinement satisfaisante car elle nécessite une quantité d'énergie importante et ne peut fonctionner qu'avec une grande quantité de matière fondue.

Selon l'énergie utilisée, la fusion d'un kilogramme de verre nécessite 0,2 Kg de fuel ou 1KWh pour les fours électriques.

On connait également d'après le document WO2008/057483 un procédé pour réaliser une forme densifiée à partir d'une poudre de silicium. Selon ce document, la poudre de silicium séché est déposée sur un support avec des formes en creux adaptées à la forme densifiée de silicium souhaitée. Cette solution ne permet d'obtenir que des formes densifiées avec un faible volume. En effet, si on augmente le volume des formes en creux, la forme densifiée n'est pas homogène et comprend de nombreuses inclusions de gaz.

Aussi, la présente invention vise à pallier aux inconvénients de l'art antérieur en proposant un procédé de fusion d'au moins une matière minérale en poudre permettant de réduire la consommation énergétique et d'obtenir un produit homogène.

A cet effet, l'invention a pour objet un procédé de fusion d'au moins une matière minérale en poudre consistant à utiliser au moins un faisceau laser pour apporter l'énergie nécessaire à la fusion, caractérisé en ce qu'il consiste à alimenter progressivement en poudre minérale la zone impactée par le ou les faisceau(x) laser afin d'obtenir une surface d'interaction entre la matière et le ou les faisceau(x) laser la plus importante possible.

Selon une application particulière, l'invention a pour objet un procédé de fabrication d'une fritte de verre élaborée à partir d'un mélange de matières premières vitrifiables sous forme de poudre comprenant les étapes de fusion dudit mélange, de refroidissement rapide dudit mélange fondu et de broyage dudit mélange refroidi et solide, caractérisé en ce qu'il consiste à utiliser au moins un faisceau laser pour apporter l'énergie nécessaire à la fusion du mélange de matières premières vitrifiables et à alimenter progressivement la zone impactée par le ou les faisceau(x) laser en mélange sous forme de poudre.

D'autres caractéristiques et avantages ressortiront de la description qui va suivre de l'invention, description donnée à titre d'exemple uniquement, en regard des dessins annexés sur lesquels :
- la figure 1 est un schéma illustrant une première variante du procédé de fusion d'au moins une poudre minérale, et
- la figure 2 est un schéma illustrant une autre variante du procédé de fusion d'au moins une poudre minérale.

De manière connue une fritte de verre est réalisée à partir d'un mélange de matières premières vitrifiables sous forme de poudre.

Ce mélange comprend essentiellement de la silice et des oxydes.

On distingue trois types d'oxydes à savoir, les oxydes formateurs de réseau, les oxydes modificateurs de réseau et les oxydes intermédiaires.

Les oxydes formateurs de réseau sont indispensables pour la formation du réseau vitreux. A titre d'exemple, les oxydes formateurs de réseau les plus courants sont les suivants : SiO₂, B₂O₃, P₂O₅, GeO₂, V₂O₅ et As₂O₃.

Les oxydes modificateurs de réseau ne peuvent pas former à eux seuls le réseau vitreux et sont essentiellement des oxydes alcalins ou des oxydes alcalino-terreux, par exemple Li₂O, Na₂O, K₂O, CaO, MgO et BaO. Parmi, les oxydes modificateurs de réseau, on distingue les fondants qui abaissent la température de fusion des oxydes formateurs et les stabilisants qui modifient les propriétés physiques du verre atténuées par l'adjonction du ou des fondant(s).

Les fondants sont constitués des oxydes alcalins. A titre d'exemple, on peut citer l'oxyde de sodium, l'oxyde de potassium, l'oxyde de magnésium.

Les stabilisants sont constitués des oxydes alcalino-terreux et visent à atténuer les effets des fondants qui tendent à fragiliser le réseau. A titre d'exemple, on peut citer l'oxyde de calcium, l'oxyde de zinc, l'oxyde de fer, l'oxyde de plomb.

Les oxydes intermédiaires ont différents comportements. Certains peuvent être des formateurs ou des modificateurs en fonction de la composition du mélange vitrifiable. D'autres n'auront ni l'une ni l'autre de ces fonctions mais un rôle intermédiaire. A titre d'exemple, on peut citer comme oxydes intermédiaires, Al₂O₃, PbO, ZnO, CdO, TiO₂.

Le procédé d'élaboration d'une fritte de verre comprend les étapes consistant à déterminer la nature des composants et leurs quantités, homogénéiser le mélange de matières premières, provoquer la fusion dudit mélange, refroidir très rapidement par trempe le mélange fondu puis broyer le mélange solidifié.

Selon l'invention pour provoquer la fusion du mélange, on utilise un faisceau laser qui apporte la quantité d'énergie suffisante pour provoquer l'élévation de température et la fusion du mélange.

Selon une caractéristique importante de l'invention, la fusion du mélange est réalisée en continu. Ainsi, on prévoit une alimentation en mélange qui apporte progressivement la poudre minérale ou le mélange de poudres minérales au niveau de la zone impactée par le faisceau laser.

Ainsi, la présence de poudre au niveau de la zone impactée par le faisceau laser permet d'augmenter la surface servant à l'absorption de l'énergie fournie par ledit faisceau laser. Cette meilleure absorption de l'énergie du faisceau laser permet d'obtenir une température plus importante qui tend à réduire la viscosité du mélange et facilite l'évacuation des bulles de gaz.

Grâce à cette solution, on obtient un procédé de fusion d'au moins une poudre minérale qui permet de réduire la consommation énergétique et d'obtenir un produit homogène.

Selon une caractéristique de l'invention, le faisceau laser doit transmettre à la matière une quantité d'énergie supérieure ou égale à 50 W/cm².

A titre d'exemple, on peut utiliser un laser de type CO₂ fonctionnant avec une longueur d'onde de l'ordre de 10,6 µm.

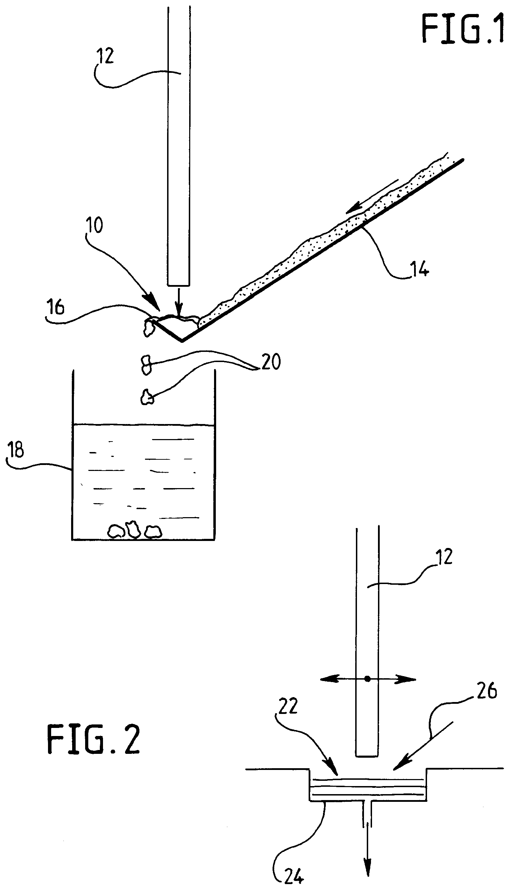

Selon un mode de réalisation illustré sur la figure 1, le dispositif de fabrication d'une fritte de verre comprend une zone en creux 10 en direction de laquelle est dirigé un faisceau laser 12. Selon les cas, le faisceau laser peut être focalisé ou non.

En amont de cette zone en creux 10, le dispositif comprend une zone d'alimentation en mélange de matières premières vitrifiables sous forme de poudre. Cette zone d'alimentation est constituée d'un plan incliné 14 sur lequel s'écoule un lit de mélange de matières premières sous forme de poudre avec un débit de préférence sensiblement constant. Une vis sans fin peut être prévue pour assister l'écoulement obtenu par gravité ou provoquer l'écoulement du mélange de matières premières vitrifiables avec un débit sensiblement constant.

Au niveau de la zone en creux 10, le faisceau laser 12 engendre la fusion de la partie du mélange de matières premières vitrifiables présentes à cet instant.

Selon cette variante, la zone impactée est alimentée en continu en poudre par gravité.

Le mélange fondu est évacué progressivement au niveau d'un trop plein 16 situé à l'opposé du plan incliné pour chuter dans un réservoir 18 dans lequel est présent un liquide notamment de l'eau pour provoquer le refroidissement rapide du mélange fondu par trempe. L'évacuation du mélange fondu se fait de manière naturelle sous forme de gouttes 20 qui se solidifient en chutant dans le réservoir 18.

Les gouttes solidifiées sont ensuite séchées puis broyées pour obtenir une fritte de verre qui sera ensuite utilisée pour l'élaboration d'émaux.

Le procédé selon l'invention permet d'obtenir une fusion du mélange de matières vitrifiables en continu et de réduire sensiblement la consommation d'énergie nécessaire.

Selon un autre avantage, cette solution permet de réduire la quantité de bulles dans le mélange fusionné. De plus, on note que les parties du dispositif en contact avec le mélange en fusion susceptibles d'être changées sont réduites contrairement aux pots utilisés selon l'art antérieur.

Selon une autre caractéristique de l'invention, le dispositif peut comprendre des moyens d'asservissement de la puissance du laser. A cet effet, on peut prévoir des moyens de mesure de la température du mélange au niveau de la zone en creux 10 et piloter la puissance du faisceau laser 12. Selon un mode de réalisation, les moyens de mesure de la température se présentent sous la forme d'une caméra thermique. Compte tenu du faible volume de matière en fusion et donc de sa faible inertie, il est possible de réguler avec précision et avec une grande réactivité la puissance du laser.

L'invention n'est pas limitée à cette application et peut convenir à tous les procédés comportant une étape de fusion d'au moins une matière minérale en poudre.

Selon les variantes, le faisceau laser peut être fixe ou mobile et dans ce cas balayer une zone.

Selon les cas, le dispositif peut comprendre des moyens pour moduler la géométrie du spot du faisceau laser ou la répartition d'énergie au niveau du spot. De même, le dispositif peut comprendre plusieurs faisceaux de manière à obtenir un spot découlant de la superposition de plusieurs spots.

Selon une première variante, la zone en creux 10 peut avoir une section en V selon un plan vertical comme illustré sur la figure 1.

Selon une autre variante, le dispositif peut comprendre une zone en creux 22 avec une section sensiblement circulaire selon un plan horizontal, comme illustré sur la figure 2. Dans ce cas, le fond 24 de la zone en creux peut être plat, comme illustré sur la figure 2. Le dispositif comprend des moyens 26 pour alimenter progressivement la zone en creux 22. La poudre peut être déversée en continu sur la zone impactée par le faisceau laser 12 par exemple à l'aide d'un plan incliné ou d'une vis sans fin. En variante, la poudre peut être disposée au niveau de la zone impactée par le faisceau laser 12 couche par couche à l'aide par exemple d'un racleur.

Selon les cas, le fond 24 de la zone en creux peut être mobile et descendre progressivement pour accumuler les couches successives de poudre fusionnées.

Selon une autre possibilité illustrée sur la figure 2, le fond 24 peut comprendre une évacuation de la matière en fusion vers une autre partie de la chaîne de production par exemple des moyens pour mettre en forme le verre.

Avantageusement, le dispositif comprend des moyens pour générer des turbulences dans le mélange en fusion pour l'homogénéiser, par exemple par vibration ou mouvement de la zone en creux, par une différence de pression ou de température du mélange.

A cet effet, des moyens pour émettre des vibrations dans la matière en fusion peuvent être prévus afin de faciliter l'évacuation des bulles de gaz et obtenir un matériau homogène.

Selon un mode de réalisation, la zone en creux 10 peut être reliée à un élément vibrant ou rapportée sur un support vibrant.

On peut également associer au moins deux faisceaux laser avec des angles d'incidence différents pour homogénéiser le gradient de température.

Enfin, il est possible d'utiliser le mélange à fusionner pour former une forme en creux à la manière d'un auto creuset.

## Revendications

1. Procédé de fabrication d'une fritte de verre élaborée à partir d'un mélange de matières premières vitrifiables sous forme de poudre comprenant les étapes de fusion dudit mélange, de refroidissement rapide dudit mélange fondu et de broyage dudit mélange refroidi et solide, **caractérisé en ce qu'**il consiste à utiliser au moins un faisceau laser pour apporter l'énergie nécessaire à la fusion du mélange de matières premières vitrifiables et à alimenter progressivement la zone en fusion impactée par le ou les faisceau(x) laser en mélange de matières premières vitrifiables sous forme de poudre afin d'obtenir une surface d'interaction entre la matière et le ou les faisceau(x) laser la plus importante possible et à évacuer progressivement la matière en fusion.

2. Procédé de fabrication d'une fritte de verre selon la revendication 1, **caractérisé en ce que** ledit au moins un faisceau laser doit transmettre à la matière une quantité d'énergie supérieure ou égale à 50 W/cm ².

3. Dispositif pour la fabrication d'une fritte de verre élaborée à partir d'un mélange de matières premières vitrifiables sous forme de poudre, **caractérisé en ce qu'**il comprend une zone en creux (10) au niveau de laquelle est prévu un mélange de matières premières vitrifiables en fusion impacté par au moins un faisceau laser (12), un plan incliné (14) qui alimente en continu ladite zone en creux en matières premières vitrifiables sous forme de poudre afin d'obtenir une surface d'interaction entre la matière et le ou les faisceau(x) laser la plus importante possible, un trop plein (16) situé à l'opposé du plan incliné au niveau duquel est évacué le mélange en fusion et un réservoir (18) dans lequel est présent un liquide notamment de l'eau pour provoquer le refroidissement rapide du mélange fondu par trempe.

4. Dispositif pour la fabrication d'une fritte de verre selon la revendication 3, **caractérisé en ce que** les moyens d'alimentation comprennent une vis sans fin pour calibrer le débit de la matière minérale en poudre.

5. Dispositif pour la fabrication d'une fritte de verre selon la revendication 3 ou 4, **caractérisé en ce qu'**il comprend des moyens pour générer des turbulences dans le mélange en fusion pour l'homogénéiser.

## Patentansprüche

1. Verfahren zur Herstellung einer Glasmasse, die auf der Grundlage einer Mischung aus pulverförmigen verglasbaren Ausgangsstoffen hergestellt wird, mit den Verfahrensschritten eines Aufschmelzens dieser Mischung, einer schnellen Abkühlung der verschmolzenen Masse und einer Zerkleinerung der abgekühlten und festen Mischung, **dadurch gekennzeichnet, dass** dieses darin besteht, wenigstens einen Laserstrahl zu verwenden, um die zum Aufschmelzen der Mischung aus verglasbaren Ausgangsstoffen notwendige Energie zuzuführen und die durch den oder die Laserstrahl(en) beeinflusste Schmelzzone in der Mischung aus pulverförmigen verglasbaren Ausgangsstoffen schrittweise zu versorgen, um eine möglichst umfangreiche Wechselwirkungsoberfläche zwischen dem Material und dem oder den Laserstrahl(en) zu erhalten und um das geschmolzene Material schrittweise abzuführen.

2. Verfahren zur Herstellung einer Glasmasse nach Anspruch 1, **dadurch gekennzeichnet, dass** der wenigstens eine Laserstrahl an das Material eine Energiemenge größer gleich 50 W/cm² abgibt.

3. Vorrichtung für die Herstellung einer Glasmasse, die auf der Grundlage einer Mischung aus pulverförmigen verglasbaren Ausgangsstoffen hergestellt wird, **dadurch gekennzeichnet, dass** diese einen Hohlbereich (10) aufweist, in dem eine durch wenigstens einen Laserstrahl (12) hervorgerufene Schmelze der Mischung aus verglasbaren Ausgangsstoffe vorgesehen ist, und eine geneigte Ebene (14) aufweist, die kontinuierlich den Hohlbereich mit pulverförmigen verglasbaren Ausgangsstoffen versorgt, um eine möglichst umfangreiche Wechselwirkungsoberfläche zwischen dem Material und dem oder den Laserstrahl(en) zu erhalten, und einen Überlauf (16) aufweist, der gegenüber der geneigten Ebene angeordnet ist und in dessen Bereich die geschmolzene Mischung abgeführt wird, und ein Reservoir (18) aufweist, in der eine Flüssigkeit, insbesondere Wasser vorhanden ist, um eine schnelle Abkühlung der geschmolzenen Mischung durch Abschrecken herbeizuführen.

4. Vorrichtung für die Herstellung einer Glasmasse nach Anspruch 3, **dadurch gekennzeichnet, dass** die Zuführmittel eine Förderschnecke umfassen, um die Menge des pulverförmigen mineralischen Materials einzustellen.

5. Vorrichtung für die Herstellung einer Glasmasse nach Anspruch 3 oder 4, **dadurch gekennzeichnet, dass** diese Mittel aufweist, um Turbulenzen in der geschmolzenen Mischung zu erzeugen, um diese zu homogenisieren.

## Claims

1. A method for manufacturing a glass frit produced from a mixture of vitrifiable raw materials in powder form, comprising the steps of melting of said mixture, rapid cooling of said molten mixture and grinding of said cooled solid mixture, **characterised in that** it comprises using at least one laser beam for providing the energy necessary for the melting of the mixture of vitrifiable raw materials and gradually supplying the molten zone impacted by the laser beam or beams with a mixture of vitrifiable raw materials in powder form in order to obtain an interaction surface between the material and the laser beam or beams that is as large as possible, and gradually discharging the molten material.

2. A method for manufacturing a glass frit according to claim 1, **characterised in that** said at least one laser beam transmits to the material a quantity of energy greater than or equal to 50 W/cm².

3. A device for manufacturing a glass frit produced by a mixture of vitrifiable raw materials in powder form, **characterised in that** it comprises a hollow region (10) in which a mixture of molten vitrifiable raw materials is provided, impacted by at least one laser beam (12), an inclined plane (14) that continuously supplies said hollow region with vitrifiable raw materials in powder form in order to obtain an interaction surface between the material and the laser beam or beams that is as large as possible, an overflow (16) situated opposite the inclined plane at which the molten mixture is discharged and a reservoir (18) in which a liquid is present, in particular water, for causing rapid cooling of the molten mixture by quenching.

4. A device for manufacturing a glass frit according to claim 3, **characterised in that** the supply means comprise a worm for calibrating the flow rate of the mineral material in powder form.

5. A device for manufacturing a glass frit according to claim 3 or 4, **characterised in that** it comprises means for generating turbulences in the molten mixture in order to homogenise it.
